# EUROPEAN PATENT APPLICATION

(11) **EP 4 818 861 A1**
(43) Date of publication of application: **07.10.2026**
(21) Application number: 25220602.4
(22) Date of filing: 03.12.2025
(51) Int. Cl.: G06F 3/0481, G06F 3/0484, G06F 3/0482, G06F 3/04883

(54) **DISPLAY METHOD FOR ELECTRONIC DEVICE, DISPLAY DEVICE, DEVICE, STORAGE MEDIUM, AND PROGRAM PRODUCT**

(30) Priority: 03.04.2025 CN 202510421532
(71) Applicant: Beijing Xiaomi Mobile Software Co., Ltd., Beijing 100085 (CN)
(72) Inventor: ZHANG, Ruxin, Beijing 100085 (CN); LUO, Xi, Beijing 100085 (CN); YUAN, Zhihui, Beijing 100085 (CN); ZHOU, Zhong, Beijing 100085 (CN); CAI, Yu, Beijing 100085 (CN); LIANG, Zhe, Beijing 100085 (CN); LI, Jiayan, Beijing 100085 (CN)
(74) Representative: Dehns Germany Partnerschaft mbB

(57) **Abstract**

The present disclosure relates to a display method for an electronic device, a display device, a device, a storage medium and a program product. The method includes: in response to a first preset operation for a first application, displaying key information of the first application through a first target component, wherein the first application includes a target application whose application type satisfies a first condition and/or whose running state satisfies a second condition, and the first target component is located at a first preset position of a display screen of the electronic device; and in response to at least one second preset operation for the first target component, displaying a first window of the first application in a floating manner on a display interface of the display screen, wherein the first window includes the key information of the first application and information associated with the key information.

## Description

### TECHNICAL FIELD

The present disclosure relates to the field of electronic technologies, and in particular to a display method for an electronic device, a display device, a device, a storage medium, and a program product.

### BACKGROUND

In the related arts, if a screen does not display an application interface of an application, a user can view new notification information of the application only when the new notification information of the application is received. When the new notification information of the application is not received, the user often needs to perform multiple operations to view the application information of the application, for example, swiping through to find an application icon, and controlling a display interface of the screen to switch, which not only increases the user's operation burden, resulting in reduced efficiency in information viewing, but also is not conducive to improving screen utilization.

### SUMMARY

In order to overcome the problems in the related arts, the present disclosure provides a display method for an electronic device, a display device, a device, a storage medium, and a program product, thereby improving the display screen utilization while allowing a user to view the key information of the application and information associated with the key information at any time through simple operations, thereby improving the efficiency and convenience of viewing application information.

According to a first aspect of embodiments of the present disclosure, there is provided a display method for an electronic device, including:
in response to a first preset operation for a first application, displaying key information of the first application through a first target component, wherein the first application includes a target application whose application type satisfies a first condition and/or whose running state satisfies a second condition, and the first target component is located at a first preset position of a display screen of the electronic device; and
in response to at least one second preset operation for the first target component, displaying a first window of the first application in a floating manner on a display interface of the display screen, wherein the first window includes the key information of the first application and information associated with the key information.

In some embodiments, in response to the at least one second preset operation for the first target component, displaying the first window of the first application in the floating manner on the display interface of the display screen includes:
in response to a first operation for the first target component, displaying a first card in the floating manner on the display interface, wherein the first card includes the key information of the first application and the information associated with the key information.

In some embodiments, the method further includes:
in response to a second operation for the first card, displaying the first application in a small-window form on the display interface.

In some embodiments, the method further includes:
in response to displaying the first card in the floating manner on the display interface, removing the key information of the first application from the first target component.

In some embodiments, in response to the first preset operation for the first application, displaying the key information of the first application through the first target component includes:
in response to the first preset operation and key information of a second application being displayed in the first target component, moving the key information of the second application from the first target component to a second target component for display, and displaying the key information of the first application in the first target component; and
wherein a priority of the first application is higher than a priority of the second application, the second target component is located at a second preset position of the display screen of the electronic device, and the second preset position is different from the first preset position.

In some embodiments, the method further includes:
in response to removing the key information of the first application from the first target component, moving the key information of the second application from the second target component to the first target component for display.

In some embodiments, the method further includes:
in response to a third preset operation for a third application and the key information of the second application being displayed in the first target component, displaying key information of the third application in the second target component; and
wherein a priority of the third application is lower than the priority of the second application.

In some embodiments, the method further includes:
in response to a third operation for the first card, displaying an application interface of the first application in full screen.

In some embodiments, in response to the first preset operation for the first application, displaying the key information of the first application through the first target component includes at least one of:
in response to switching from the application interface of the first application to an application interface of a fourth application, and the first application being in an running state, displaying, through the first target component, identification information of the first application and/or running information indicated by the running state;
in response to triggering a message reminder event of the first application, displaying, through the first target component, the identification information of the first application and/or prompt information indicated by the message reminder event; or
in response to triggering a preset function of the first application, displaying, through the first target component, the identification information of the first application and/or a function identifier indicated by the preset function.

In some embodiments, the method further includes:
displaying a second window of a fifth application on the display interface, wherein the second window includes key information of the fifth application and information associated with the key information of the fifth application, and highlighting the second window relative to the first window; or
displaying the key information of the fifth application and the information associated with the key information of the fifth application in the first window.

In some embodiments, highlighting the second window relative to the first window includes at least one of:
the second window being in a prominent display position relative to the first window;
the second window having a prominent display effect relative to the first window; or
the second window having a prominent display size relative to the first window.

In some embodiments, in response to the first preset operation for the first application, displaying the key information of the first application through the first target component includes:
in response to the first preset operation, obtaining the key information of the first application, wherein the key information of the first application includes identification information of the first application and data information of the first application;
displaying, through a first animation, the identification information of the first application in the first target component of a first size;
simultaneously displaying, through a second animation, the identification information of the first application and the data information of the first application in the first target component of a second size;
wherein the first size is smaller than the second size.

According to a second aspect of embodiments of the present disclosure, there is provided a display device, including:
a display module, configured to, in response to a first preset operation for a first application, display key information of the first application through a first target component, wherein the first application includes a target application whose application type satisfies a first condition and/or whose running state satisfies a second condition, and the first target component is located at a first preset position of a display screen of the electronic device; and
an execution module, configured to, in response to at least one second preset operation for the first target component, display a first window of the first application in a floating manner on a display interface of the display screen, wherein the first window includes the key information of the first application and information associated with the key information.

In some embodiments, the execution module is specifically configured to:
in response to a first operation for the first target component, display a first card in the floating manner on the display interface, wherein the first card includes the key information of the first application and the information associated with the key information.

In some embodiments, the display device further includes:
a second display module, configured to, in response to a second operation for the first card, display the first application in a small-window form on the display interface.

In some embodiments, the display device further includes:
a removal module, configured to, in response to displaying the first card in the floating manner on the display interface, remove the key information of the first application from the first target component.

In some embodiments, the first display module is specifically configured to:
in response to the first preset operation and key information of a second application being displayed in the first target component, move the key information of the second application from the first target component to a second target component for display, and display the key information of the first application in the first target component; and
wherein a priority of the first application is higher than a priority of the second application, the second target component is located at a second preset position of the display screen of the electronic device, and the second preset position is different from the first preset position.

In some embodiments, the display device further includes:
a first adjustment module, configured to, in response to removing the key information of the first application from the first target component, move the key information of the second application from the second target component to the first target component for display.

In some embodiments, the display device further includes:
a second adjustment module, configured to, in response to a third preset operation for a third application and the key information of the second application being displayed in the first target component, display key information of the third application in the second target component; and
wherein a priority of the third application is lower than the priority of the second application.

In some embodiments, the display device further includes:
a third display module, configured to, in response to a third operation for the first card, display an application interface of the first application in full screen.

In some embodiments, the first display module is specifically configured as at least one of:
in response to switching from the application interface of the first application to an application interface of a fourth application, and the first application being in an running state, displaying, through the first target component, identification information of the first application and/or running information indicated by the running state;
in response to triggering a message reminder event of the first application, displaying, through the first target component, the identification information of the first application and/or prompt information indicated by the message reminder event; or
in response to triggering a preset function of the first application, displaying, through the first target component, the identification information of the first application and/or a function identifier indicated by the preset function.

In some embodiments, the display device further includes:
a fourth display module, configured to display a second window of a fifth application on the display interface, wherein the second window includes key information of the fifth application and information associated with the key information of the fifth application, and highlighting the second window relative to the first window; or
a fifth display module, configured to display the key information of the fifth application and the information associated with the key information of the fifth application in the first window.

In some embodiments, the fourth display module is configured as at least one of:
the second window being in a prominent display position relative to the first window;
the second window having a prominent display effect relative to the first window; or
the second window having a prominent display size relative to the first window.

In some embodiments, the first display module is further configured to:
in response to the first preset operation, obtain the key information of the first application, wherein the key information of the first application includes identification information of the first application and data information of the first application;
display, through a first animation, the identification information of the first application in the first target component of a first size;
simultaneously display, through a second animation, the identification information of the first application and the data information of the first application in the first target component of a second size;
wherein the first size is smaller than the second size.

According to a third aspect of embodiments of the present disclosure, there is provided an electronic device, including:
a processor; and
a memory configured to store a computer program or instructions;
wherein the processor executes the computer program or the instructions to implement steps of any display method in the first aspect above.

According to a fourth aspect of embodiments of the present disclosure, there is provided a non-transitory computer-readable storage medium having a computer program or instructions stored thereon, wherein the computer program or the instructions in the storage medium, when executed by a processor, implement steps of any display method in the first aspect above.

According to a fifth aspect of embodiments of the present disclosure, there is provided a computer program product, including a computer program or instructions, which, when executed by a processor, implement steps of any display method in the first aspect above.

The technical solutions provided by the embodiments of the present disclosure may include the following beneficial effects:
in the embodiments of the present disclosure, in response to the first preset operation for the first application, the key information of the first application is displayed through the first target component, and in response to the at least one second preset operation for the first target component, the first window of the first application is displayed in the floating manner on the display interface of the display screen, and the first window includes the key information of the first application and the information associated with the key information.

On the one hand, the key information of the application is displayed through the first target component, which can improve the display screen utilization while providing users with a more intuitive operation manner, thereby reducing the users' operation burden. On the other hand, the user can view the key information of the application and the information associated with the key information at any time without switching the current display interface, which improves the efficiency of viewing the application information and thus improves the convenience of operating the electronic device.

It should be noted that the above general description and the following detailed description are merely exemplary and explanatory and should not be construed as limiting of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 shows a schematic flowchart of a display method for an electronic device according to an example embodiment.
FIG. 2 shows a schematic diagram of an interface display according to an example embodiment.
FIG. 3 shows a schematic diagram of an interface display according to an example embodiment.
FIG. 4 shows a schematic diagram of an interface display according to an example embodiment.
FIG. 5 shows a block diagram of a display device according to an example embodiment.
FIG. 6 shows a structural block diagram of an electronic device according to an example embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present disclosure. Instead, they are merely examples of devices and methods consistent with some aspects related to the present disclosure as recited in the appended claims.

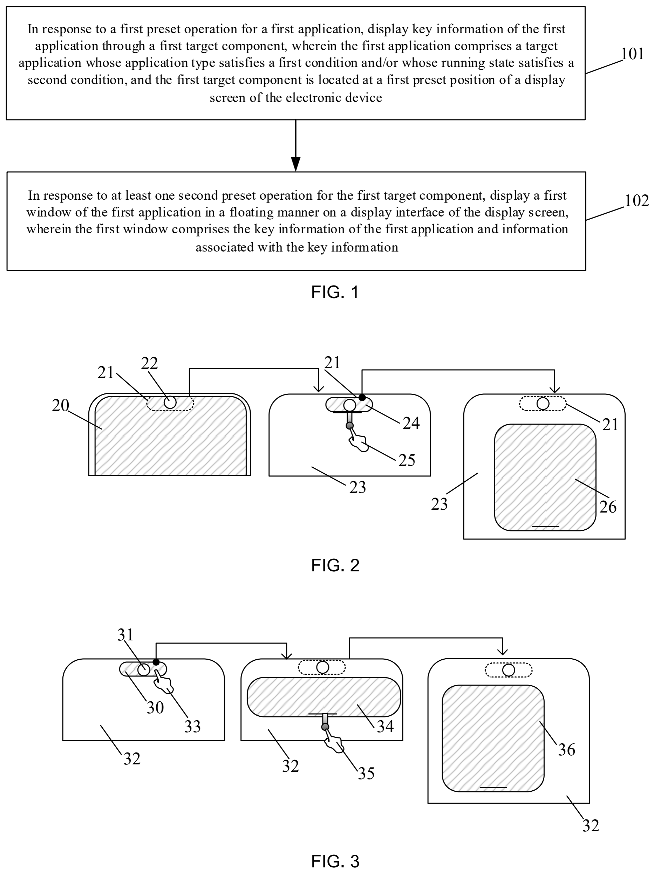

FIG. 1 shows a schematic flowchart of a display method for an electronic device according to an example embodiment. As shown in FIG. 1, the display method mainly includes steps 101 and 102.

In the step 101, in response to a first preset operation for a first application, key information of the first application is displayed through a first target component, the first application includes a target application whose application type satisfies a first condition and/or whose running state satisfies a second condition, and the first target component is located at a first preset position of a display screen of the electronic device.

In the step 102, in response to at least one second preset operation for the first target component, a first window of the first application is displayed in a floating manner on a display interface of the display screen, and the first window includes the key information of the first application and information associated with the key information.

It should be noted that the display method proposed in the present disclosure can be applied to an electronic device. Here, the electronic device may include: a terminal device, for example, a mobile terminal or a fixed terminal. The mobile terminal may include: a mobile phone, a tablet computer, a laptop computer, a wearable electronic devices or the like. The fixed terminal may include a desktop computer, a smart TV, a vehicle-mounted device, etc. In some other embodiments, the display method can also be applied to applications installed on the electronic device.

In some other embodiments, the display method of the embodiments of the present disclosure may be configured in a display device, which may be provided in the electronic device, and the embodiments of the present disclosure are not limited thereto. It should be noted that an execution subject of the embodiments of the present disclosure may be implemented as a Central Processing Unit (CPU) of the electronic device in terms of hardware, or as a related background service of the electronic device in terms of software, which is not limited.

In some embodiments, as the electronic devices continue to develop, some manufacturers will integrate screens and cameras together. However, integrating the screen and the camera together will make an area on the screen where the camera is provided inconvenient for displaying an interface, which is not conducive to improving screen utilization.

In embodiments of the present disclosure, by providing the first target component on the display screen, a more intuitive operation manner is provided to the user, so that the area where the camera is located can also display interface information, thereby improving the display screen utilization.

Here, the first target component is located at the first preset position of the display screen of the electronic device, and the first preset position includes but is not limited to a left position, a right position, an upper position, or a lower position of the display screen. In some embodiments, when the electronic device includes a front camera, the first preset position includes at least one of a position area where the front camera of the electronic device is located, a position area to the left of the front camera of the electronic device but excluding a position of the front camera, or a position area to the right of the front camera of the electronic device but excluding the position of the front camera.

In embodiments of the present disclosure, a display form of the first target component on the display screen includes but is not limited to a polygon, a circle, or a capsule shape formed by elongating a rounded rectangle, etc. The first target component can be a component at the software level or a component obtained through the integration of software and hardware levels.

Taking the electronic device including the front camera as an example, at the hardware level of the electronic device, the first target component can integrate the front camera, an ambient light sensor, a distance sensor, and a dot projector for facial recognition of the electronic device, making the electronic device more compact and optimizing the hardware space utilization of the electronic device. Since the first target component integrates the sensors, fixing the position of the first target component can reduce the risk of accidental touches or unauthorized access. Furthermore, since the first target component involves dynamic interaction, fixing the first target component at the upper side of the display screen not only aligns with user usage habits (for example, notification information of the electronic device typically pops up from the top of the display screen) but also reduces manufacturing costs. Therefore, during hardware design, a physical notch can be created at the top position of the display screen to accommodate at least the front camera, the ambient light sensor, the distance sensor, and the dot projector. This physical notch serves as a physical carrier for the first target component. A fixed position of the physical notch determines the immovability of an interaction area of the first target component, that is, the first target component is always located at the upper side of the display screen. A shape of the physical notch can be arbitrarily set as needed. For example, to optimize hardware structure utilization, the physical notch can be in a "capsule" or "circular" form.

At the software level of the electronic device, the Android system can "blur" a boundary area of the physical notch into a dynamic interactive interface, and use real-time rendering of pixels around the screen to convert the hardware notch into a functional access point, so that the first target component can dynamically adjust, according to running states of different applications and a system state of the electronic device, a size of the first target component and/or display content of the first target component, thereby not only improving the display screen utilization, but also providing the users with a more intuitive operation manner and reducing the users' operation burden.

In embodiments of the present disclosure, the first application includes the target application whose application type satisfies the first condition and/or whose running state satisfies the second condition. In response to the first preset operation for the first application, relevant information of the first application can be displayed through the first target component, so that the relevant information of the first application can be viewed without switching the display interface of the display screen or waiting for new notification information of the first application, thereby improving the convenience of using the electronic device.

It should be noted that the target application whose application type satisfies the first condition can be understood as an application that is not in the running state but has high user attention, such as communication applications, payment applications, or applications that trigger message reminder events. In addition, the target application whose running state satisfies the second condition can be understood as an application that is in the running state, such as an application displayed in the foreground of the electronic device or applications running in the background of the electronic device.

Here, the first preset operation can be triggered by the electronic device. For example, the electronic device triggers a message reminder event of the first application, such as an alarm reminder, a schedule reminder, a phone call reminder, or a charging reminder. In another example, the electronic device triggers a message notification event of the first application, such as a text message notification, an email notification, etc. For example, the first application supports the user to purchase a concert ticket. After the user purchases the concert ticket, even if the first application is not in the running state, the electronic device will trigger a schedule reminder event within a certain period to remind the user of the opening time of the concert. In a human-car-home scenario, the message notification reminder can also be a reminder of a foreign object detected by a doorbell at home, thereby triggering the message notification event and displaying notification information of "current visitor present" through the first target component. In a scenario where the smart car turns on a home mode or away mode, if the car is near home or leaves home, the message notification reminder will be triggered, and a travel message notification will be displayed through the first target component.

In addition, the first preset operation can also be triggered by the user, for example, the user adjusts an application displayed in the foreground to run in the background. For example, the user switches the display interface of the electronic device from an application interface of a music application to an application interface of a travel application, and does not close the music application. For another example, the user adjusts the first application that is not in the running state to the foreground for display and triggers a preset function of the first application. For example, the user triggers a recording function, a screen recording function or a screen projection function of the first application.

It can be understood that in order to reduce the space occupied by the first target component on the display screen, in response to the first preset operation, the key information of the first application can be displayed through the first target component. Here, the key information of the first application includes but is not limited to identification information, running information indicated by the running state, prompt information indicated by the message reminder event, notification information indicated by the message notification event, and a function identifier indicated by the preset function, etc.

In some embodiments, the first target component will automatically adjust its display priority to prioritize a high-priority task. Specifically, when the first target component displays key information of the music application, if it is detected that the electronic device has switched from the application interface to the lock screen, the first target component will remove the key information of the music application and display key information about facial recognition, allowing the first target component to prioritize a facial recognition task.

In some embodiments, in order to improve development efficiency and reduce maintenance cost of the first target component, a size of the first target component can be preset. In response to the first preset operation for the first application, the first target component displays the key information of the first application according to a preset size.

For example, when the electronic device triggers an incoming call reminder event of the first application, displaying the first target component in a first preset size is switched to displaying the first target component in a second preset size, and contact information and contact phone number are displayed in the first target component of the second preset size. When the user adjusts the first application from a foreground display state to a background running state, displaying the first target component in the first preset size is maintained, and the identification information of the first application is displayed through the first target component of the second preset size. Here, the second preset size is larger than the first preset size.

In some other embodiments, in order to improve the utilization of the first target component, an actual size of the first target component is determined by the key information of the first application. In response to the first preset operation for the first application, a current size of the first target component is adjusted based on the key information of the first application to obtain the actual size of the first target component, and the first target component displays the key information of the first application according to the actual size. Here, the actual size is positively correlated with the amount of information in the key information.

For example, when a user adjusts a taxi-hailing application from being displayed in the foreground to running in the background, the current size of the first target component is adjusted based on the identification information of the taxi-hailing application and the driver's license plate number, and an application icon of the taxi-hailing application and the driver's license plate number are displayed through the adjusted first target component. When the user adjusts a music application from being displayed in the foreground to running in the background, the current size of the first target component is adjusted based on an album cover and playback identifier of the music application, and the album cover and playback identifier of the music application are displayed through the adjusted first target component. Here, the driver's license plate number occupies a larger display area than the playback identifier. Therefore, a size of the first target component adjusted based on the key information of the taxi-hailing application is larger than a size of the first target component adjusted based on the key information of the music application.

Here, the first target component can display key information of one application. For example, when the first preset operation is detected and the first target component displays key information of a second application, the key information of the second application is removed from the first target component, and the key information of the first application is displayed in the first target component. In addition, the first target component can also display key information of multiple applications. For example, when the first preset operation is detected and the first target component displays the key information of the second application, a display style (e.g., the display quantity and/or the display size) of the key information of the second application in the first target component is adjusted, and then the key information of the first application is displayed through the adjusted first target component. Here, a priority of the first application is higher than a priority of the second application.

It should be noted that in order to reduce the user's operation burden, when at least one second preset operation of the user for the first target component is detected, a first window of the first application can be displayed in the floating manner on the display interface. The first window includes the key information of the first application and the information associated with the key information. In this way, the application information of the first application can be viewed in real time and in detail without the need to switch the display interface or wait for receiving the new notification information, thereby improving the usage experience of the user.

In embodiments of the present disclosure, the first window includes the key information of the first application and the information associated with the key information, and the information associated with the key information includes a control for executing a preset function of the first application and/or extended information of the key information. For example, when the key information is the license plate number, the information associated with the key information includes a color of the vehicle, a manufacturer of the vehicle, the driver's phone number and/or a control for online communication with the driver; when the key information is a screen recording identifier, the information associated with the key information includes a current recording duration, a control for pausing the screen recording and/or a control for ending the screen recording; and when the key information is a doorbell ringing notification, the information associated with the key information includes a ringing time, the number of rings, a control for opening a door and/or a control for communicating with a visitor.

Here, the first window can be a first card, and the user can perform a simple editing operation for content displayed in the first card. The first window can also be a floating window of the first application, and the user can perform a complex editing operation for the floating window. Taking the first application being the music application as an example, the first card includes a progress bar and/or a switch button for the next song, and based on the first card, the user can adjust the playback progress of the current music and/or switch the current song to the next song. In addition to the progress bar and the switch button for the next song, the floating window also includes controls for returning to the previous application interface, adding songs to favorites, and/or viewing the music list, and based on the floating window, the user can switch the application interface displayed in the floating window, add or remove music from favorites, and/or view the music list.

Taking the first application being a video application and triggering a screen projection function of the video application as an example, the first card includes a control for ending screen projection, a progress bar and/or a selection button, and based on the first card, the user can adjust the playback progress and playback content of the display end and/or end the screen projection operation. In addition to the control for ending the screen projection, the progress bar and the selection button, the floating window also includes a barrage control, a clarity control and/or a playback speed control, and based on the floating window, the user can turn on or off barrages, adjust the playback clarity and/or the playback speed, etc.

In some embodiments, in response to operation information of the at least one second preset operation not satisfying a third condition, the first card is displayed in the floating manner on the display interface, and in response to the operation information of the at least one second preset operation satisfying the third condition, the floating window of the first application is displayed in the floating manner on the display interface. Taking the second preset operation being a sliding operation as an example, the third condition includes a preset sliding duration and/or a preset sliding distance. When a sliding duration indicated by operation information of the sliding operation is less than the preset sliding duration, and a sliding distance indicated by the operation information is less than the preset sliding distance, the first card is displayed in the floating manner on the display interface. When the sliding duration indicated by the operation information is greater than or equal to the preset sliding duration, and/or the sliding distance indicated by the operation information is greater than or equal to the preset sliding distance, the floating window is displayed in the floating manner on the display interface.

Here, the display interface can be a main screen interface, which includes icons of multiple applications, such as icons for Clock, Calendar, and Messages, along with third-party applications. The display interface can also be an application interface of a certain application, such as a chat interface of a social application, which is not limited in the embodiments of the present disclosure.

Taking triggering one second preset operation on the first target component as an example, when the second preset operation is a target operation, the first window of the first application is displayed in the floating manner on the display interface. Here, the target operation can be set arbitrarily as needed, such as a double-click operation, a multi-finger operation, a long press operation, or a sliding operation.

In some embodiments, a sensor integrated within the first target component can capture and analyze light or resistance changes generated when a finger touches the display screen, to determine the number of touches. If the number of touches indicated by the first preset operation within a preset time is greater than or equal to a preset number threshold, the second preset operation is determined to be the multi-finger operation, and the first window is displayed in the floating manner on the display interface.

In some other embodiments, the sensor integrated within the first target component can sense the contact of the finger twice in succession and generate two touch signals in a short period of time. When a time interval between two touch signals indicated by the second preset operation is less than a preset time threshold and a touch distance between the two touch signals is less than a preset distance threshold, the touch operation is determined to be the double-click operation, thereby displaying the first window in the floating manner on the display interface.

Taking triggering two second preset operations on the first target component as an example, in response to the first operation for the first target component, the first card is displayed in the floating manner on the display interface, and in response to an eighth operation for the first card, the floating window of the first application is displayed in the floating manner on the display interface.

In some embodiments, when the first target component displays key information of multiple applications, in response to at least one second preset operation for a first position of the first target component, the first window of the application displayed at the first position is displayed in the floating manner on the display interface, and in response to at least one second preset operation for a second position of the first target component, the first window of the application displayed at the second position is displayed in the floating manner on the display interface.

Here, a display state of the first window can be adjusted according to the user's touch operation to meet the user's personalized needs. For example, the first window includes a title bar control, and the title bar control is used to control the display size, display position and/or display content of the first window. The first preset operation is any one of a single-click operation, multiple consecutive single-click operations, or a long press operation for the title bar control, and the title bar control is located in a top area or a bottom area of the first window.

In some embodiments, when an upper edge of the first window touches an upper edge of the display screen, or a distance the first window moves upward is greater than a preset length threshold, or a speed at which the first window is moved upward is greater than a preset speed threshold, the electronic device outputs prompt information, and removes the first window from the display interface. The prompt information is used to prompt the user that the first window is about to be closed.

In some embodiments, when the first window is displayed in the floating manner on the display interface, if a touch operation for the display interface is detected, the first window is maintained to be displayed in the floating manner on the display interface, and if a touch operation for the application information displayed in the first window is detected, the first window will adjust the display content in response to the touch operation, but will not switch the display interface to the application interface displayed in the first window, that is, no interface switching will be performed. In this way, the user can handle multiple tasks on the display interface, which is beneficial to improving the user's work efficiency.

For example, FIG. 2 shows a schematic diagram of an interface display according to an example embodiment. As shown in FIG. 2, when there is no target application on the electronic device (such as a mobile phone) whose application type satisfies the first condition and/or whose running state satisfies the second condition, a first target component 21 is set to a hidden state on the display screen of the electronic device, where the first target component 21 at least covers an area where a front camera 22 of the electronic device is located and at least part of a first application interface 20. In response to switching from the first application interface 20 of the first application to a second application interface 23 of a second application, the first target component 21 is switched from the hidden state to a display state, and key information 24 of the first application is displayed. In response to at least one second preset operation 25 for the first target component 21, a first window 26 of the first application is displayed in the floating manner on the second application interface 23 currently displayed on the display screen, and the key information of the first application and information associated with the key information are displayed in the first window 26.

In embodiments of the present disclosure, in response to the first preset operation for the first application, the key information of the first application is displayed through the first target component, and in response to the at least one second preset operation for the first target component, the first window of the first application is displayed in the floating manner on the display interface of the display screen, and the first window includes the key information of the first application and the information associated with the key information.

On the one hand, the key information of the application is displayed through the first target component, which can improve the display screen utilization while providing users with a more intuitive operation manner, thereby reducing the users' operation burden. On the other hand, the user can view the key information of the application and the information associated with the key information at any time without switching the current display interface, which improves the efficiency of viewing the application information and thus improves the convenience of operating the electronic device.

In some embodiments, in response to the at least one second preset operation for the first target component, displaying the first window of the first application in the floating manner on the display interface of the display screen includes:
in response to a first operation for the first target component, displaying a first card in the floating manner on the display interface, and the first card includes the key information of the first application and the information associated with the key information.

Here, the second preset operation includes the first operation, and the first operation includes but is not limited to a click operation, a sliding operation, or a long press operation.

In embodiments of the present disclosure, a size of the first card may be preset. For example, in response to the first operation for the first target component, the first card of the preset size is displayed in the floating manner on the display interface. Alternatively, the size of the first card may be determined based on the key information of the first application and the information associated with the key information. For another example, an initial size of the first card is adjusted based on the key information of the first application and the information associated with the key information, and the first card may be displayed in the floating manner on the display interface according to the adjusted size.

For example, different first applications may display different amounts of information on the first card. For example, the application information displayed by the taxi-hailing application on the first card may include a distance between the driver and a boarding point and a time required for the driver to reach the boarding point. The application information displayed by a high-speed rail ticket purchasing application on the first card may include the starting and ending stations, departure and arrival times, and ticket gate information. Therefore, in order to accurately view the key information of the first application in the first card while reducing the space occupied by the first card on the display screen, the initial size of the first card may be adjusted based on the key information of the first application and the information associated with the key information.

Here, when the first card is displayed in the floating manner on the display interface, the display state of the first card can be adjusted according to the user's touch operation to meet the user's personalized needs. For example, when an upper edge of the first card touches the upper edge of the display screen, or a distance the first card moves upward is greater than the preset length threshold, or a speed at which the first card is moved upward is greater than the preset speed threshold, the electronic device outputs prompt information, and removes the first card from the display interface. The prompt information is used to prompt the user that the first card is about to be closed. In another example, in response to a third operation for the first card, an application interface of the first application is displayed in full screen.

In some embodiments, the first target component is located in a position area where the front camera of the electronic device is located, and when the first operation for the first target component is detected, the first card is displayed on the display interface. The first card does not cover the position area where the front camera is located, so that the user can view the key information of the first application and the information associated with the key information, and pay attention to the key information of other applications displayed through the first target component, thereby improving the intelligence and flexibility of the first target component, and further improving the convenience of operations on the electronic device.

For example, when the user views the information displayed by the first card, the electronic device can display a schedule reminder (for example, reminding the user of the opening time of a performance) through the first target component. In this way, when the first operation is responded to, the display of other applications on the first target component will not be hindered, thereby improving the usage experience of the user.

In embodiments of the present disclosure, when the first operation is detected, the first card can be displayed in the floating manner on the display interface, so that the user can view the key information of the first application and the information associated with the key information at any time without switching the display interface, thereby reducing the user's operation burden. In addition, the user can adjust the display state of the first card according to needs to meet the user's personalized needs and enhance the user's usage experience.

In some embodiments, the method further includes:
in response to a second operation for the first card, displaying the first application in a small-window form on the display interface.

It can be understood that in different usage scenarios, the user may have varying requirements for the level of detail of the information associated with the key information displayed on the display interface. Taking the first application being the music application as an example, when the user needs to adjust the music playback progress, a control for adjusting the music playback progress can be displayed on the display interface, and when the user needs to search for an artist and a target song in a search box, more complete application information can be displayed on the display interface to facilitate the user operation.

Therefore, in embodiments of the present disclosure, in response to the first operation for the first target component, the first card is displayed in the floating manner on the display interface, so that the user can view, based on the first card, the key information of the first application and the information associated with the key information, and/or perform the simple editing operation.

When the second operation for the first card is detected, the first application is displayed in the small-window form on the display interface, allowing the user, based on the first application in the small-window form, to view more application information and/or perform the complex editing operation. Compared to directly displaying the first application in the small-window form, displaying in response to the second operation can reduce the situation where a large amount of application information is ineffectively displayed and reduce screen occupancy.

In embodiments of the present disclosure, the first operation and the second operation can be arbitrarily set as needed, and operation types of the first operation and the second operation can be the same or different. For example, the first operation is a click operation, and the second operation is a click operation, a sliding operation, or a downward dragging operation. In addition, the second operation is different from the eighth operation.

Here, the first application displayed in the small-window form displays more application information than the first window of the first application, and the user can perform the more complex operation. For example, the user can view a music playlist based on the first window and select a target song from the playlist for playing, and the user can trigger, based on the first application displayed in the small-window form, all the preset functions includes in the first application, such as searching for the target music in the search box, posting comments, creating a custom playlist, viewing the top playlists, and listening to the radio.

For example, FIG. 3 shows a schematic diagram of an interface display according to an example embodiment. As shown in FIG. 3, a first target component 30 is displayed on the display screen of the electronic device (such as the mobile phone), where the first target component 30 at least covers an area where a front camera 31 of the electronic device is located and at least part of a display interface 32, and the key information of the first application is displayed in the first target component 30. In response to a first operation 33 for the first target component 30, a first card 34 is displayed in the floating manner on the first interface, and the first card 34 includes the key information of the first application and the information associated with the key information, and the first card 34 does not cover the area where the front camera 31 is located. In response to a second operation 35 for the first card 34, the first application is displayed in a small-window form 36 on the display interface 32.

In some embodiments, the display state of the first application in the small-window form can be adjusted according to the user's touch operation to meet the user's personalized needs. For example, the first application in the small-window form includes a title bar control, which is used to control the display size, display position and/or display content of the small window. The touch operation is any one of a single-click operation, multiple consecutive single-click operations, or a long press operation for the title bar control, and the title bar control is located in the top area or the bottom area of the small window.

In some embodiments, when the first application is displayed in the small-window form on the display interface, if the touch operation for the display interface is detected, the floating display of the small window on the display interface is maintained. If a touch operation for the small window is detected, the small window will adjust the display content in response to the touch operation, but the application interface of the first application will not be displayed in full screen. In this way, the user can handle multiple tasks on the display interface, which is beneficial to improving the user's work efficiency.

In some embodiments, if the display interface includes a dialog box of a target application, in response to a fourth operation for the small window, the small window is sent to the dialog box of the target application, so that the application information displayed in the small window can be shared with a sharing object indicated by the dialog box. In this way, the application information can be shared without the user having to manually edit or take a screenshot, thereby improving the efficiency of information sharing. Here, the fourth operation is any one of a sliding operation, multiple consecutive single-click operations, or a long press operation.

In embodiments of the present disclosure, when the second operation is detected, the first application can be displayed in the small-window form on the display interface, so that the user can handle multiple tasks on the display interface, thereby improving the user's work efficiency while increasing the display screen utilization.

In some embodiments, the method further includes:
in response to displaying the first card in the floating manner on the display interface, removing the key information of the first application from the first target component.

It can be understood that when the first card is displayed in the floating manner on the display interface, the key information of the first application can be removed from the first target component, which can reduce the situation where the first target component displays invalid information, thereby improving the utilization of the first target component.

In some embodiments, in response to removing the key information of the first application from the first target component, if the first preset operation for another application is not detected, the first target component can be controlled to be adjusted from the display state to the hidden state, thereby saving the space occupied by the first target component on the display screen. If the first preset operation for the other application is detected, the size of the first target component can be adjusted based on the key information of the other application, and the key information of the other application can be displayed through the adjusted first target component.

For example, the first preset position is a position area where the front camera of the electronic device is located. When the first target component is in the display state, a capsule-shaped area of a first preset size is displayed on the display screen, and the key information of the first application is displayed in an area of the capsule-shaped area of the first preset size excluding the front camera and the sensor. When the first target component is in the hidden state, the capsule-shaped area according to the first preset size is adjusted to a capsule-shaped area according to a second preset size. Here, a first edge of the capsule-shaped area of the first preset size contacts the front camera, and a first edge of the capsule-shaped area of the second preset size contacts the sensor.

In embodiments of the present disclosure, in response to displaying the first card in the floating manner on the display interface, the key information of the first application is removed from the first target component, which can reduce the situation where the first target component displays the invalid information, thereby improving the intelligence of the target component.

In some embodiments, in response to the first preset operation for the first application, displaying the key information of the first application through the first target component includes:
in response to the first preset operation and key information of a second application being displayed in the first target component, moving the key information of the second application from the first target component to a second target component for display, and displaying the key information of the first application in the first target component; and
a priority of the first application is higher than a priority of the second application, the second target component is located at a second preset position of the display screen of the electronic device, and the second preset position is different from the first preset position.

Here, display forms of the second target component and the first target component on the display screen can be the same, for example, the first target component and the second target component are both capsule-shaped. The display forms of the second target component and the first target component on the display screen can also be different, for example, the first target component is capsule-shaped and the second target component is circular.

It can be understood that in order to reduce the space occupied by the target component on the display screen, the first target component can be set to be highlighted on the display screen relative to the second target component, so that the display position of the key information of the application can be determined based on the priority of the application, thereby improving the utilization of the target component.

In embodiments of the present disclosure, the highlighting may be a prominence in visual appearance, and the highlighting of the first target component on the display screen relative to the second target component includes at least one of: the first target component has a prominent display effect (for example, color) relative to the second target component, the first target component has a prominent display size relative to the second target component, or the first target component being at a first preset position of the display screen is better than the second target component being at a second preset position of the display screen.

Here, different display modes may be used for display respectively, or a combination of different display modes may be used for display, so that the first target component is visually prominent, which is not specifically limited here.

For example, when the electronic device includes the front camera, the first preset position may be the position area where the front camera of the electronic device is located, and the second preset position may be the position area to the left of the front camera of the electronic device but excluding the position of the front camera, or the position area to the right of the front camera of the electronic device but excluding the position of the front camera. When the electronic device does not include the front camera, the first preset position may be an upper position of the display screen, and the second preset position may be the left position, the right position, or the lower position of the display screen.

It can be understood that when the first preset operation is detected and the key information of the second application is displayed in the first target component, priorities of the second application and the first application are determined. When the priority of the first application is higher than the priority of the second application, the key information of the second application is moved from the first target component to the second target component for display, and the key information of the first application is displayed in the first target component, thereby highlighting the key information of the first application and improving the usage experience of the user.

In some embodiments, when the priority of the first application is lower than that of the second application, the key information of the second application is maintained to be displayed in the first target component, and the key information of the first application is displayed in the second target component to highlight the key information of the second application.

Here, the priority of the application can be related to the application type. For example, a navigation application is more real-time critical than a music application, so a priority of the navigation application is higher than a priority of the music application. The priority of the application can also be related to the key information of the application. For example, key information of a travel application includes travel information, while key information of the music application includes an album cover of a song. The user pays more attention to the travel information than the album cover, so a priority of the travel application is higher than that of the music application.

In embodiments of the present disclosure, when there are multiple applications displayed on the target component, the target component for displaying the key information of the application is determined based on the priority of each application, thereby improving the intelligence of the target component and further improving the convenience of operating the electronic device.

In some embodiments, the method further includes:
in response to removing the key information of the first application from the first target component, moving the key information of the second application from the second target component to the first target component for display.

It can be understood that when the key information of the first application is removed from the first target component, it is determined that there is no key information to be displayed in the first target component at present, then the key information of the second application is moved from the second target component to the first target component for display, thereby improving the flexibility of the second target component.

In some embodiments, considering the difference between the application information of the first application and the application information of the second application, a size of the first target component displaying the application information of the first application does not match the application information of the second application, resulting in poor display effect of the key information of the second application in the first target component. Therefore, the size of the first target component can be adjusted based on the application information of the second application, and the application information of the second application can be displayed through the adjusted first target component.

In some embodiments, in response to moving the key information of the second application from the second target component to the first target component for display, the second target component can be removed from the display interface, and when a third preset operation of the third application is detected, the second target component can be displayed at the second preset position, and the key information of the third application can be displayed in the second target component.

In embodiments of the present disclosure, when the key information in the first target component is removed and the second target component displays key information of a third application, the key information of the third application is moved to the first target component for display, thereby dynamically adjusting the display position of the key information, which facilitates to improve the flexibility of the target component and enhance the usage experience of the user.

In some embodiments, the method further includes:
in response to a third preset operation for a third application and the key information of the second application being displayed in the first target component, displaying key information of the third application in the second target component; and
a priority of the third application is lower than the priority of the second application.

Here, the third preset operation for the third application includes but is not limited to switching from the application interface of the third application to an application interface of the sixth application while the third application is in the running state, triggering a message reminder event (or message notification event) of the third application, or triggering a preset function of the third application, etc.

It can be understood that in response to the third preset operation and the key information of the second application being displayed in the first target component, the priorities of the second application and the third application are determined. When the priority of the second application is higher than the priority of the third application, the key information of the second application is maintained to be displayed in the first target component, and the key information of the third application is displayed in the second target component, thereby highlighting the key information of the second application and improving the usage experience of the user.

In some embodiments, when the priority of the third application is higher than that of the second application, the key information of the second application is moved from the first target component to the second target component for display, and the key information of the third application is displayed in the first target component.

In embodiments of the present disclosure, after the key information of the first application is removed, when there are multiple applications displayed on the target component, the target component for displaying the key information of the application is determined based on the priority of each application, thereby improving the intelligence of the target component.

In some embodiments, the method further includes:
in response to a third operation for the first card, displaying an application interface of the first application in full screen.

Here, the third operation can be set arbitrarily according to needs, as long as the third operation is different from the second operation. For example, the second operation is a sliding operation, and the third operation is a clicking operation, a long press operation or the like.

It can be understood that, considering the user's need to quickly switch the application interface of the first application, a linkage relationship can be established between the third operation and an interface switching instruction of the display screen. When the third operation is detected, the application interface of the first application can be displayed in full screen.

In embodiments of the present disclosure, in response to the third operation, the application interface of the first application can be displayed in full screen. Compared with the user browsing through the application icons of the system interface to find the application icon of the first application, or switching the display interface multiple times, the number of user operations can be reduced and the convenience of using the electronic device can be improved.

In some embodiments, in response to the first preset operation for the first application, displaying the key information of the first application through the first target component includes at least one of:
in response to switching from the application interface of the first application to an application interface of a fourth application, and the first application being in an running state, displaying, through the first target component, identification information of the first application and/or running information indicated by the running state;
in response to triggering a message reminder event of the first application, displaying, through the first target component, the identification information of the first application and/or prompt information indicated by the message reminder event; or
in response to triggering a preset function of the first application, displaying, through the first target component, the identification information of the first application and/or a function identifier indicated by the preset function.

In embodiments of the present disclosure, when it is detected that the application interface of the first application is switched to the application interface of the fourth application, and the first application is in the running state, it is determined that the first application is an application with high user attention, and the identification information and/or the running information of the first application can be displayed on the first target component. When the message notification event of the first application or the preset function of the first application is triggered, it is determined that the state of the first application has changed, and the identification information, the running information or the function identifier of the first application can be displayed on the first target component, thereby providing the user with a more intuitive operation manner and improving the efficiency of the user in viewing and processing the application information of the first application.

In some embodiments, taking the electronic device being the mobile phone as an example, in addition to an incoming call message, a text message, or a charging message, the prompt information can also smart home notification information. For example, in response to a refrigerator or an air conditioner communicatively connected to the mobile phone being subject to an abnormal state, prompt information "the refrigerator or the air conditioner is subject to the abnormal state" is displayed through the first target component. In response to the first operation for the first target component, the first card is displayed in the floating manner on the display interface of the display screen. The first card includes a control that controls the refrigerator or the air conditioner to stop running and a control that controls the refrigerator or the air conditioner to restart. For another example, in response to a ringing event of a doorbell communicatively connected to the mobile phone, prompt information "a visitor has rung the doorbell outside" is displayed through the first target component. In response to the first operation for the first target component, the first card is displayed in the floating manner on the display interface of the display screen, and the first card includes a control for opening the door and a control for communicating with the visitor. In this way, by displaying the prompt information indicated by the message reminder event through the first target control, the user can handle abnormal events and/or linkage events in the smart home, thereby improving the convenience and efficiency of human-computer interaction in smart home scenarios.

For example, taking the electronic device being the vehicle as an example, the first target component is located at a first preset position on the vehicle's display screen. In response to distance information between the vehicle and the destination satisfying a preset condition, prompt information "the vehicle is about to arrive at the destination" is displayed through the first target component. In response to the first operation for the first target component, the first card is displayed in the floating manner on the display interface of the display screen. The first card includes a time the vehicle will arrive at the destination, a distance between the vehicle and the destination, and the vehicle's current driving speed. In this way, by displaying the prompt information indicated by the message reminder event through the first target control, the user is reminded of the relevant travel information, improving the user's convenience in using the vehicle and thus enhancing the user's driving experience.

Taking the electronic device being the mobile phone as an example, when the display content of the mobile phone (screen projection end) is projected to a first device (display end) for display, a screen projection identifier is displayed through the first target component. In response to the first operation for the first target component, the first card is displayed in the floating manner on the display interface of the display screen. The first card includes a control for adjusting a playback progress of the display end and a control for ending the screen projection. In this way, by displaying, through the first target control, the function identifier indicated by the preset function, the screen projection process can be conveniently handled without the user having to switch interfaces, thereby improving the convenience and efficiency of human-computer interaction in the screen projection scenario.

Taking the electronic device being the tablet computer as an example, in response to triggering a recording function of the tablet computer, a recording identifier is displayed through the first target component. In response to the first operation for the first target component, the first card is displayed in the floating manner on the display screen. The first card includes a control for pausing the recording, a control for ending the recording, and the current recording duration. In this way, by displaying, through the first target control, the function identifier indicated by the preset function, the recording process can be conveniently processed without the user having to switch between the interfaces, thereby improving the convenience and efficiency of human-computer interaction in the recording scenario.

In embodiments of the present disclosure, the running information indicated by the running state, the prompt information indicated by the message reminder event, and the function identifier indicated by the preset function are displayed through the first target component, which can improve the convenience and efficiency of human-computer interaction in smart home scenes, driving scenes, screen projection scenes or recording scenes.

In some embodiments, the method further includes:
displaying a second window of a fifth application on the display interface, and the second window includes key information of the fifth application and information associated with the key information of the fifth application, and the second window is highlighted relative to the first window; or
displaying the key information of the fifth application and the information associated with the key information of the fifth application in the first window.

In embodiments of the present disclosure, when the first window is displayed in the floating manner on the display interface, the user can trigger at least one fourth preset operation for the target component on the display screen as needed, so that the user can quickly view the key information of the fifth application and the information associated with the key information of the fifth application.

Here, the at least one fourth preset operation can act on the first target component or the second target component, which is not limited here. Moreover, the at least one fourth preset operation is of the same operation type as the at least one second preset operation.

When the at least one fourth preset operation acts on the first target component, the fifth application can be the second application displayed in the first target component, or a sixth application among the target applications other than the first application, with a higher priority than the second application. When the at least one fourth preset operation acts on the second target component, the fifth application can be the third application displayed in the second target component, or a sixth application among the target applications other than the first application, with a higher priority than the third application.

For example, in response to the first window being displayed in the floating manner on the display interface and the at least one fourth preset operation for the first target component, a second window of the second application is displayed in the floating manner on the display interface; or, in response to the first window being displayed in the floating manner on the display interface and the at least one fourth preset operation for the second target component, a second window of the third application is displayed in the floating manner on the display interface.

It should be noted that the highlighting may be a prominence in visual appearance. For example, it can include color highlighting, position highlighting, form highlighting, etc. That is, when the first window and the second window are displayed, they can be displayed separately in different display modes, or displayed in a combination of different display modes, so that the second window is visually prominent. As long as the first window and the second window can be distinguished, it is not specifically limited here.

Here, the second window includes the key information of the fifth application and the information associated with the key information, and the information associated with the key information includes: a control for executing a preset function of the fifth application and/or extended information of the key information.

In embodiments of the present disclosure, the second window is a second card, and the user can perform the simple editing operation for the content displayed in the second card. The second window can also be a floating window of the fifth application, and the user can perform the complex editing operation for the floating window. Taking the fifth application being the music application as an example, the second card includes a progress bar and/or a switch button for the next song, and based on the second card, the user can adjust the playback progress of the current music and/or switch the current song to the next song. In addition to the progress bar and the switch button for the next song, the floating window also includes controls for returning to the previous application interface, adding songs to favorites, and/or viewing the music list, and based on the floating window, the user can switch the application interface displayed in the floating window, add or remove music from favorites, and/or view the music list.

In some embodiments, when the second card is displayed in the floating manner on the display interface, part of the second card at least covers the first window, and a display state of the second card can be adjusted according to the user's touch operation to meet the user's personalized needs. For example, when an upper edge of the second card touches the upper edge of the display screen, or a distance the second card moves upward is greater than the preset length threshold, or a speed at which the second card is moved upward is greater than the preset speed threshold, the electronic device outputs prompt information and removes the second card from the display interface, and the prompt information is used to prompt the user that the second card is about to be closed. In another example, in response to a sixth operation for the second card, the application interface of the fifth application is displayed in full screen. Here, the sixth operation has the same operation type as the third operation.

Taking the second window being the second card as an example, in response to a fifth operation for the second card, the fifth application is displayed in the small-window form on the display interface. Here, the fifth operation has the same operation type as the second operation. In some embodiments, the display state of the fifth application in the small-window form can be adjusted according to the user's touch operation to meet the user's personalized needs. For example, the fifth application in the small-window form includes a title bar control, which is used to control the display size, display position and/or display content of the small window. The touch operation is any one of a single-click operation, multiple consecutive single-click operations, or a long press operation for the title bar control, and the title bar control is located in the top area or the bottom area of the small window.

In some other embodiments, if the display interface includes a dialog box of a target application, in response to a seventh operation for the small window, the small window is sent to the dialog box of the target application, so that the application information displayed in the small window can be shared with a sharing object indicated by the dialog box. In this way, the application information can be shared without the user having to manually edit or take a screenshot, thereby improving the efficiency of information sharing. Here, the seventh operation has the same operation type as the fourth operation, and can be any of a sliding operation, multiple consecutive single-click operations, or a long press operation.

It can be understood that the user's attention to the fifth application is higher than that to the first application, and the floating display of multiple windows may block more interface content and occupy more system resources. Therefore, the key information of the first application and the information associated with the key information of the first application can be removed from the first window, and the key information of the fifth application and the information associated with the key information of the fifth application can be displayed in the first window, thereby saving the display screen occupancy space while reducing the display freeze of the electronic device due to the consumption of more system resources.

In embodiments of the present disclosure, the second window can be highlighted relative to the first window on the first interface to attract the user's attention without the user having to spend time distinguishing between the first window and the second window. Alternatively, the display content of the first window can be directly adjusted to reduce the occupation of system resources and improve the efficiency of the user in viewing the key information of the fifth application and the information associated with the key information.

In some embodiments, highlighting the second window relative to the first window on the first interface includes at least one of:
the second window being in a prominent display position on the first interface relative to the first window;
the second window having a prominent display effect on the first interface relative to the first window; or
the second window having a prominent display size on the first interface relative to the first window.

Here, the display position refers to a position of the window on the display interface, the display effect may include color effect, form effect, etc., and the display size refers to the dimension (size) of the window.

For example, the second window may be displayed in a prominent color (e.g., red) at a middle position of the display interface or may be displayed covering the first window, so as to achieve a combination of prominent display of the position and prominent display of the display effect.

In some embodiments, a display mode can be selected based on state information of the first window to distinguish the first window from the second window, or the first window and the second window can be distinguished by a combination of different display modes, which can be selected as needed and is not specifically limited here.

In the present disclosure, the first window and the second window can be displayed separately through different display modes, or through a combination of different display modes, so that the second window is visually prominent, and thus the user can more clearly distinguish the first window and the second window, improving the convenience of user operation.

In some embodiments, in response to the first preset operation for the first application, displaying the key information of the first application through the first target component includes:
in response to the first preset operation, obtaining the key information of the first application, and the key information of the first application includes identification information of the first application and data information of the first application;
displaying, through a first animation, the identification information of the first application in the first target component of a first size;
simultaneously displaying, through a second animation, the identification information of the first application and the data information of the first application in the first target component of a second size;
the first size is smaller than the second size.

In embodiments of the present disclosure, animation effects of the first animation and the second animation may be the same or different. For example, the first animation and the second animation may be one or more of a fade-in and fade-out animation of a pop-up window display, a state animation of a shape deformation, a path animation of a circular trajectory, a flip animation, or a custom animation.

Here, the first size is smaller than the second size. The display form of the first target component of the first size and the display form of the first target component of the second size can be the same, for example, both are capsule-shaped. The display form of the first target component of the first size and the display form of the first target component of the second size can also be different, for example, the first target component of the first size is circular and the first target component of the second size is capsule-shaped.

It can be understood that when the identification information of the first application and the data information of the first application are displayed simultaneously in the second size, the identification information of the first application and the data information of the first application can be displayed adjacent to each other or separately. In addition, the data information can be determined according to the type of the first preset operation, and the data information includes one of running information, prompt information, or the function identifier.

In some embodiments, when the identification information and the data information are obtained, the identification information is displayed in the first target component of the circular display form through the first animation. In response to a preset operation for the first target component of the circular display form, the identification information and the data information are simultaneously displayed in the first target component of the capsule display form through the second animation. Here, the preset operation has a different operation type than the first operation, including but not limited to a click operation, a long press operation, or a sliding operation. In some other embodiments, when the identification information and the data information are obtained, the identification information is displayed in the first target component of the circular display form through the first animation. When a duration of displaying the identification information in the first target component of the circular display form reaches a preset duration, the identification information and the data information are simultaneously displayed in the first target component of the capsule display form through the second animation. Here, the preset duration is arbitrarily set according to needs, for example, 2 seconds.

In some embodiments, a display color of the data information of the first application matches a display color of the identification information of the first application. For example, the identification information of the first application is a song album cover, and the data information of the first application is a playback identifier. When a display color of the song album cover in the first target component is blue, the display color of the playback identifier in the first target component is also blue.

In embodiments of the present disclosure, when the key information of the first application is obtained, the key information of the first application is displayed in first target components of different sizes through animation, so that the way the first target component displays information is more vivid, thereby giving the user a better visual experience and improving the aesthetics of the display interface.

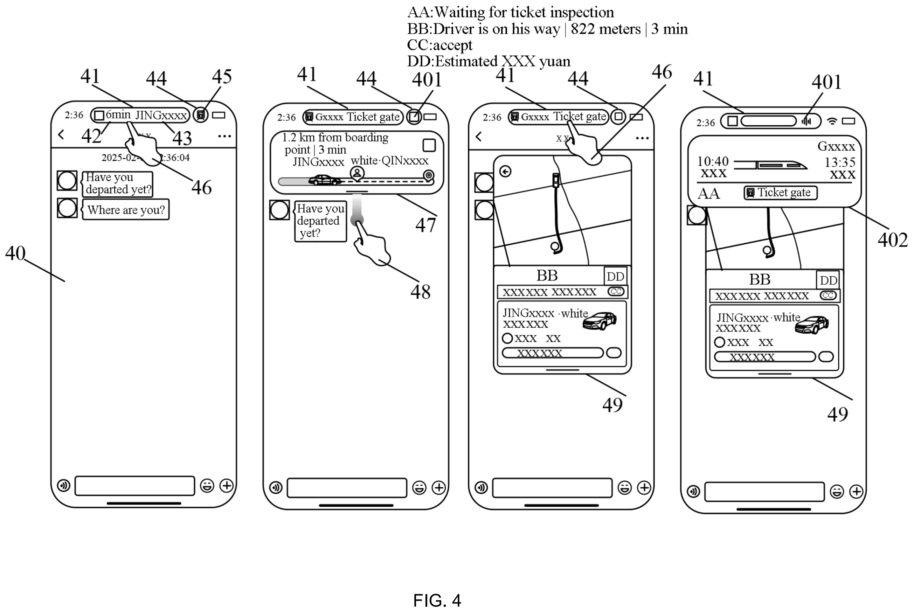

For example, FIG. 4 shows a third schematic diagram of an interface display according to an example embodiment. As shown in FIG. 4, in response to the first preset operation for the first application (e.g., the taxi-hailing application) and key information of a second application (e.g., the high-speed rail ticket purchasing application) being displayed in a first target component 41, the key information (i.e., illustrated as 45) of the second application is moved from the first target component 41 to a second target component 44 for display, and the key information (i.e., illustrated as 42 and 43) of the first application is displayed in the first target component 41. The priority of the first application is higher than the priority of the second application, the first target component 41 is located at a first preset position of the display screen of the electronic device, and the second target component 44 is located at a second preset position of the display screen of the electronic device, and the second preset position is different from the first preset position.

In response to a first operation 46 for the first target component 41, a first card 47 is displayed in the floating manner on the display interface 40, and the key information of the first application and the information associated with the key information are displayed in the first card 47. In response to the floating display of the first card 47 on the display interface 40, the key information of the first application is removed from the first target component 41. In response to the removal of the key information of the first application from the first target component 41, the key information (i.e., illustrated as 45) of the second application is moved from the second target component 44 to the first target component 41 for display. In response to the third preset operation for the third application, and the key information (i.e., illustrated as 45) of the second application being displayed in the first target component 44, the key information (i.e., illustrated as 401) of the third application is displayed in the second target component 44. The priority of the third application is lower than that of the second application.

In response to a second operation 48 for the first card 47, the first application is displayed in a small-window form 49 on the display interface 40. In response to a first operation 46 for the first target component that displays the key information of the second application, a second card 402 is displayed in the floating manner on the display interface 40, and the second card 402 includes the key information of the second application and the information associated with the key information, and at least part of the second card 402 covers the first application displayed in the small-window form 49. In response to the floating display of the second card 402 on the display interface 40, the key information of the second application is removed from the first target component 41. In response to the removal of the key information of the second application from the first target component 41, the key information (i.e., illustrated as 401) of the third application is moved from the second target component 44 to the first target component 41 for display, and the second target component 44 is removed from the display interface 40.

First, the key information of the application is displayed by the target component, which can improve the display screen utilization while providing the user with a more intuitive operation manner and reduce the user's operation burden; secondly, the user can view the key information of the application and the information associated with the key information at any time without switching the current display interface, which improves the efficiency of viewing the application information and thus improves the convenience of operating the electronic device; finally, when the second operation is detected, the application can be displayed in the small-window form on the display interface, so that the user can handle multiple tasks on the display interface, thereby improving the user's work efficiency.

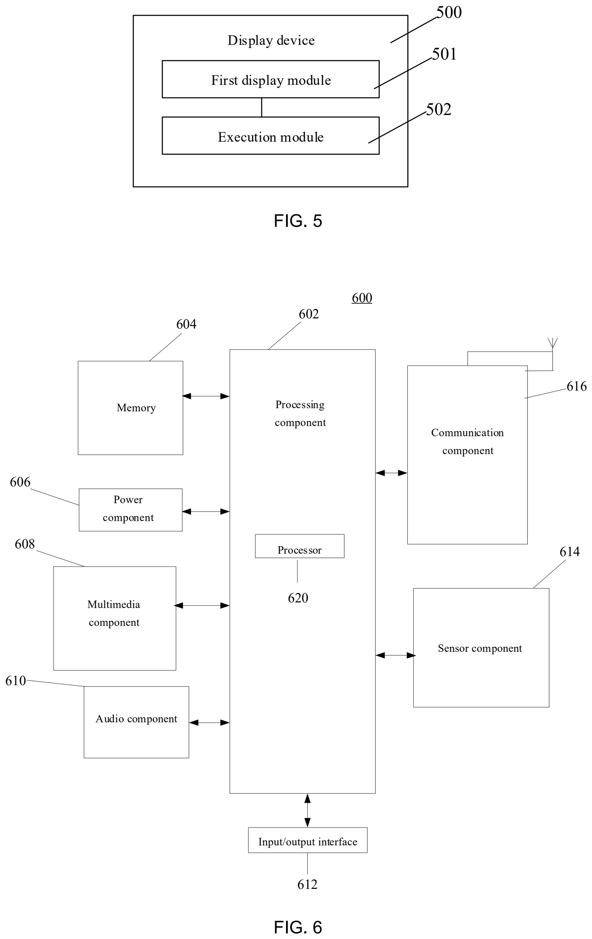

FIG. 5 shows a block diagram of a display device according to an example embodiment. As shown in FIG. 5, a display device 500 includes:
a first display module 501, configured to, in response to a first preset operation for a first application, display key information of the first application through a first target component, wherein the first application includes a target application whose application type satisfies a first condition and/or whose running state satisfies a second condition, and the first target component is located at a first preset position of a display screen of the electronic device; and
an execution module 502, configured to, in response to at least one second preset operation for the first target component, display a first window of the first application in a floating manner on a display interface of the display screen, wherein the first window includes the key information of the first application and information associated with the key information.

In some embodiments, the execution module 502 is specifically configured to:
in response to a first operation for the first target component, display a first card in the floating manner on the display interface, wherein the first card includes the key information of the first application and the information associated with the key information.

In some embodiments, the display device 500 further includes:
a first display module, configured to, in response to a second operation for the first card, display the first application in a small-window form on the display interface.

In some embodiments, the display device 500 further includes:
a removal module, configured to, in response to displaying the first card in the floating manner on the display interface, remove the key information of the first application from the first target component.

In some embodiments, the first display module 501 is specifically configured to:
in response to the first preset operation and key information of a second application being displayed in the first target component, move the key information of the second application from the first target component to a second target component for display, and display the key information of the first application in the first target component; and
wherein a priority of the first application is higher than a priority of the second application, the second target component is located at a second preset position of the display screen of the electronic device, and the second preset position is different from the first preset position.

In some embodiments, the display device 500 further includes:
a first adjustment module, configured to, in response to removing the key information of the first application from the first target component, move the key information of the second application from the second target component to the first target component for display.

In some embodiments, the display device 500 further includes:
a second adjustment module, configured to, in response to a third preset operation for a third application and the key information of the second application being displayed in the first target component, display key information of the third application in the second target component; and
wherein a priority of the third application is lower than the priority of the second application.

In some embodiments, the display device 500 further includes:
a third display module, configured to, in response to a third operation for the first card, display an application interface of the first application in full screen.

In some embodiments, the first display module 501 is specifically configured as at least one of:
in response to switching from the application interface of the first application to an application interface of a fourth application, and the first application being in an running state, displaying, through the first target component, identification information of the first application and/or running information indicated by the running state;
in response to triggering a message reminder event of the first application, displaying, through the first target component, the identification information of the first application and/or prompt information indicated by the message reminder event; or
in response to triggering a preset function of the first application, displaying, through the first target component, the identification information of the first application and/or a function identifier indicated by the preset function.

In some embodiments, the display device 500 further includes:
a fourth display module, configured to display a second window of a fifth application on the display interface, wherein the second window includes key information of the fifth application and information associated with the key information of the fifth application, and highlighting the second window relative to the first window; or
a fifth display module, configured to display the key information of the fifth application and the information associated with the key information of the fifth application in the first window.

In some embodiments, the fourth display module is specifically configured as at least one of:
the second window being in a prominent display position relative to the first window;
the second window having a prominent display effect relative to the first window; or
the second window having a prominent display size relative to the first window.

In some embodiments, the first display module 501 is further configured to:
in response to the first preset operation, obtain the key information of the first application, wherein the key information of the first application includes identification information of the first application and data information of the first application;
display, through a first animation, the identification information of the first application in the first target component of a first size;
simultaneously display, through a second animation, the identification information of the first application and the data information of the first application in the first target component of a second size;
wherein the first size is smaller than the second size.

Regarding the device in the above embodiments, the specific manner in which each module performs operations has been described in detail in the embodiment of the method, which will not be elaborated here.

FIG. 6 shows a structural block diagram of an electronic device 600 according to an example embodiment. For example, the electronic device 600 may be a mobile phone, a computer, a digital broadcast terminal, a messaging device, a gaming console, a tablet, a medical device, exercise equipment, a personal digital assistant, etc.

Referring to FIG. 6, the electronic device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the electronic device 600, such as at least one of the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the electronic device 600. Examples of such data include at least one of instructions for any applications or methods operated on the electronic device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the electronic device 600. The power component 606 may include at least one of a power management system, one or more power sources, and any other components associated with the generation, management, and distribution of power in the electronic device 600.

The multimedia component 608 includes a screen providing an output interface between the electronic device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 608 includes a front camera and/or a rear camera. The front camera and the rear camera may receive an external multimedia datum while the E electronic device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the electronic device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the electronic device 600. For instance, the sensor component 614 may detect an open/closed status of the electronic device 600, relative positioning of components, e.g., the display and the keypad, of the electronic device 600, a change in position of the electronic device 600 or a component of the electronic device 600, a presence or absence of user contact with the electronic device 600, an orientation or an acceleration/deceleration of the electronic device 600, and a change in temperature of the electronic device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include at least one of, but not limited to, an accelerometer sensor, a gyroscope sensor, a magnetic sensor, a pressure sensor, or a temperature sensor.

The communication component 616 is configured to facilitate communication, wired or wirelessly, between the electronic device 600 and other devices. The electronic device 600 can access a wireless network based on a communication standard, such as Wi-Fi, 4G, or 5G, or a combination thereof. In one embodiment, the communication component 616 receives a broadcast signal or broadcast associated information from an external broadcast management system via a broadcast channel. In one embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments of the present disclosure, the electronic device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components.

In embodiments of the present disclosure, there is further provided a non-transitory computer readable storage medium including instructions, such as the memory 604 including executable instructions or computer programs which are executable by the processor 620 in the electronic device 600 to complete the above method. For example, the non-transitory computer-readable storage medium may be a ROM, a Random Access Memory (RAM), a CD-ROM, a magnetic tape, a floppy disc, an optical data storage device, and the like.

Embodiments of the present disclosure provide a non-transitory computer-readable storage medium. Instructions in the storage medium, when executed by a processor of an electronic device, enable the electronic device to execute any display method for the electronic device in the embodiments of the present disclosure. For example, the method includes:
in response to a first preset operation for a first application, displaying key information of the first application through a first target component, wherein the first application includes a target application whose application type satisfies a first condition and/or whose running state satisfies a second condition, and the first target component is located at a first preset position of a display screen of the electronic device; and
in response to at least one second preset operation for the first target component, displaying a first window of the first application in a floating manner on a display interface of the display screen, wherein the first window includes the key information of the first application and information associated with the key information.

Embodiments of the present disclosure provide a computer program product, which includes: a computer program or executable instructions stored in a computer-readable storage medium. A processor of a computer device reads the computer program or the executable instructions from the computer-readable storage medium, and the processor executes the computer program or the executable instructions, so that the computer device executes any display method for the electronic device in the embodiments of the present disclosure.

Other embodiments of the present disclosure will be apparent to those skilled in the art from consideration of the specification and practice of the present disclosure disclosed herein. The present application is intended to cover any variations, uses, or adaptations of the present disclosure, which are in accordance with the general principles of the present disclosure and include common general knowledge or traditional technical means in the art that are not disclosed in the present disclosure. The specification and embodiments are illustrative, and the real scope and spirit of the present disclosure is defined by the claims.

It should be understood that the present disclosure is not limited to the precise structures that have been described above and shown in the drawings, and various modifications and changes can be made without departing from the scope thereof. The scope of the present disclosure is limited only by the appended claims.

## Claims

1. A display method for an electronic device, comprising:
in response to a first preset operation for a first application, displaying (101) key information of the first application through a first target component, wherein the first application comprises a target application whose application type satisfies a first condition and/or whose running state satisfies a second condition, and the first target component is located at a first preset position of a display screen of the electronic device; and
in response to at least one second preset operation for the first target component, displaying (102) a first window of the first application in a floating manner on a display interface of the display screen, wherein the first window comprises the key information of the first application and information associated with the key information.

2. The method according to claim 1, wherein in response to the at least one second preset operation for the first target component, displaying (102) the first window of the first application in the floating manner on the display interface of the display screen comprises:
in response to a first operation for the first target component, displaying a first card in the floating manner on the display interface, wherein the first card comprises the key information of the first application and the information associated with the key information.

3. The method according to claim 2, further comprising:
in response to a second operation for the first card, displaying the first application in a small-window form on the display interface.

4. The method according to claim 2, further comprising:
in response to displaying the first card in the floating manner on the display interface, removing the key information of the first application from the first target component.

5. The method according to claim 4, wherein in response to the first preset operation for the first application, displaying (101) the key information of the first application through the first target component comprises:
in response to the first preset operation and key information of a second application being displayed in the first target component, moving the key information of the second application from the first target component to a second target component for display, and displaying the key information of the first application in the first target component; and
wherein a priority of the first application is higher than a priority of the second application, the second target component is located at a second preset position of the display screen of the electronic device, and the second preset position is different from the first preset position.

6. The method according to claim 5, further comprising:
in response to removing the key information of the first application from the first target component, moving the key information of the second application from the second target component to the first target component for display.

7. The method according to claim 6, further comprising:
in response to a third preset operation for a third application and the key information of the second application being displayed in the first target component, displaying key information of the third application in the second target component; and
wherein a priority of the third application is lower than the priority of the second application.

8. The method according to any one of claims 2 to 7, further comprising:
in response to a third operation for the first card, displaying an application interface of the first application in full screen.

9. The method according to any one of claims 1 to 7, wherein in response to the first preset operation for the first application, displaying (101) the key information of the first application through the first target component comprises at least one of:
in response to switching from an application interface of the first application to an application interface of a fourth application, and the first application being in an running state, displaying, through the first target component, at least one of identification information of the first application or running information indicated by the running state;
in response to triggering a message reminder event of the first application, displaying, through the first target component, at least one of the identification information of the first application or prompt information indicated by the message reminder event; or
in response to triggering a preset function of the first application, displaying, through the first target component, at least one of the identification information of the first application or a function identifier indicated by the preset function.

10. The method according to any one of the preceding claims, further comprising:
displaying a second window of a fifth application on the display interface, wherein the second window comprises key information of the fifth application and information associated with the key information of the fifth application, and highlighting the second window relative to the first window; or
displaying the key information of the fifth application and the information associated with the key information of the fifth application in the first window.

11. The method according to claim 10, wherein highlighting the second window relative to the first window comprises at least one of:
the second window being in a prominent display position relative to the first window;
the second window having a prominent display effect relative to the first window; or
the second window having a prominent display size relative to the first window.

12. The method according to any one of claims 1 to 7, wherein in response to the first preset operation for the first application, displaying (101) the key information of the first application through the first target component comprises:
in response to the first preset operation, obtaining the key information of the first application, wherein the key information of the first application comprises identification information of the first application and data information of the first application;
displaying, through a first animation, the identification information of the first application in the first target component of a first size;
simultaneously displaying, through a second animation, the identification information of the first application and the data information of the first application in the first target component of a second size;
wherein the first size is smaller than the second size.

13. An electronic device, comprising:
a processor; and
a memory configured to store a computer program or instructions;
wherein the processor is configured to execute the computer program or the instructions to implement steps of the method according to any one of claims 1 to 12.

14. A non-transitory computer-readable storage medium having a computer program or instructions stored thereon, wherein the computer program or the instructions in the storage medium, when executed by a processor, implement steps of the method according to any one of claims 1 to 12.

15. A computer program product, comprising a computer program or instructions, wherein the computer program or the instructions, when executed by a processor, implement steps of the method according to any one of claims 1 to 12.
